# EUROPÄISCHE PATENTANMELDUNG

(11) **EP 2 000 502 A1**
(43) Veröffentlichungstag der Anmeldung: **10.12.2008**
(21) Anmeldenummer: 07109251.4
(22) Anmeldetag: 30.05.2007
(51) Int. Cl.: C08K 9/06, C09C 3/00, C09C 1/02

(54) **Composit-Teilchen**

(71) Anmelder: Sachtleben Chemie GmbH, 47198 Duisburg (DE)
(72) Erfinder: Rentschler, Thomas, 64625, Bensheim (DE)
(74) Vertreter: Dunkelberg, Oliver Thomas Michael

(57) **Zusammenfassung**

Composit-Teilchen, welches ein anorganisches Trägerteilchen mit überwiegend isotroper Geometrie und mit einer mittleren Teilchengröße zwischen 0,1 µm und 100 µm aufweist, wobei die Oberfläche dieses anorganischen Trägerteilchens mit einer photokatalytisch aktiven Substanz mit einer mittleren Teilchengröße bzw. Schichtdicke der Oberflächenbelegung zwischen 1 nm und 300 nm ganz oder teilweise bedeckt ist sowie dessen Verwendung.

## Beschreibung

Die vorliegende Erfindung betrifft ein neues Composit-Teilchen sowie dessen Verwendung in einem Verfahren zur Erhöhung der Kreidungsbeständigkeit von photokatalytisch aktiven Verbindungen in Polymere enthaltenden Bindemittelsystemen.

Photokatalytisch aktive Verbindungen, z.B. nanoskaliges Titandioxid, sind bekannt und finden seit geraumer Zeit aufgrund ihrer selbstreinigenden Eigenschaften, desinfizierenden und bakteriziden Wirkung sowie ihres passiven Reinigungseffekts in einer Vielzahl von Oberflächenbeschichtungen verschiedenster Substrate Anwendung.

So ist zum Beispiel aus dem Bereich der solaren Oberflächenreinigung bekannt, die Oberflächen verschiedenster Materialien durch das Aufbringen extrem dünner transparenter Titandioxidschichten derart zu verändern, dass beispielsweise anhaftende Fettmoleküle unter dem Einfluß von künstlicher oder solarer UV-A-Bestrahlung abgebaut werden, wodurch die unerwünschte Haftung von Schmutzpartikeln deutlich reduziert und damit der erforderliche Reinigungszyklus verlängert werden kann.

Eine weitere Eigenschaft ist neben der chemischen Reinigungswirkung dieser Beschichtungen die Möglichkeit, gezielt hydrophile bzw. hydrophobe Oberflächen zu erzeugen. Durch einfaches Bestrahlen mit Sonnenlicht gelingt es, eine zunächst wasserabweisende Oberfläche "superhydrophil" zu machen, d.h. jegliche Tropfenbildung und damit ein Beschlagen der entsprechend behandelten Oberflächen zu verhindern. Dieser Effekt ist im Dunkeln reversibel, so dass die erzeugten Schichten beliebig oft zwischen hydrophil und hydrophob hin- und hergeschaltet werden können.

Darüber hinaus ist bekannt, photokatalytisch aktive Verbindungen in Farben und Lacken einzusetzen, um diesen eine zusätzliche Funktionalität (selbstreinigende Fassadenfarbe, geruchsinhibierende Innenfarbe etc.) zu verleihen.

Bei der Einarbeitung photokatalytisch aktiver Verbindungen in Bindemittelsysteme auf Basis von Polymeren zeigt sich allerdings ein unerwünschter Effekt der Kreidung:
In Abhängigkeit von der Art und Menge des Bindemittels, Art und Höhe der Pigmentierung und den am jeweiligen Objekt herrschenden Witterungseinflüssen sowie der Bewitterungsdauer und Strahlungsintensität kommt es bei Beschichtungen im Laufe der Zeit zu einem Abbau der oberflächennahen Bindemittelschicht infolge einer oxidativen Zersetzung des Bindemittels. Durch eine Bindemittelschrumpfung und -zersetzung verlieren die Pigmentkörner ihre Bindung und liegen als mehr oder weniger lose Puderschicht an der Filmoberfläche oder dicht unterhalb dieser.
Durch das Freilegen der im Filmverbund vorher fixierten Pigment- und Füllstoffpartikel entsteht beim Abwischen der Eindruck einer "kreidenden" Oberfläche. Als "Kreidung" wird das leichte Ablösen einer solchen Schicht bezeichnet.

Diese Kreidung beruht zum einen auf einem Bindemittel-Abbau aufgrund von UV-Einwirkung, der durch verschiedene Additive (organische UV-Absorber, HALS-Verbindungen = Hindered Amine Light Stabilizers, anorganische UV-Absorber wie Titandioxid, Eisenoxid oder Zinkoxid) kompensiert werden kann. Durch den Einsatz von Titandioxid in der photokatalytisch inaktiven oder inaktivierten Form können photostabile Beschichtungszusammensetzungen erhalten werden.
Die Ursachen für die Bindemitteldegradation sind zum einen die UV-Degradation (im Folgenden als UVD bezeichnet): Hier wird durch kurzwelliges Licht der oxidative Abbau des reinen Bindemittels unabhängig von den Pigmenten ausgelöst. Dieser normale Alterungsprozess läuft gleichmäßig ab. Ist ein photoinaktives Pigment anwesend, das verstärkt UV-Strahlung aufnimmt (z.B. nicht photoaktives Titandioxid), kann dies sogar eine schützende Wirkung auf das Bindemittel haben.
Die andere Ursache für die Bindemitteldegradation ist der photokatalytische Oxidationsprozess (im Folgenden als POC bezeichnet): Beim POC reicht eine wesentlich geringere Menge kurzwelligen Lichts aus, um den oxidativen Abbau des Bindemittels auszulösen, der um ein vielfaches rascher abläuft als bei der gewöhnlichen UVD. Voraussetzung für den POC ist die Anwesenheit eines photoaktiven Pigments, das als Katalysator für die Abbauprozesse fungiert. Auch Wasser und Sauerstoff (beispielsweise durch Luft oder die in der Luft vorhandene Feuchtigkeit) müssen vorhanden sein. Der POC läuft in der Grenzzone von Pigmentoberfläche und Bindemittel ab. Das Titanweiß unterliegt als katalysierendes Pigment keinen chemischen Veränderungen.

Besonders deutlich tritt die Kreidung auf beim Vorhandensein photokatalytisch aktiver Verbindungen, insbesondere von photokatalytisch aktivem Titandioxid, was auch als "Titanweißkreiden" bezeichnet wird.

Die Unterschiede in der Kreidungsart sind literaturbekannt und beispielsweise in dem Artikel von J. Phillips "Das Titanweißkreiden: Der chemische Prozess" in der Zeitschrift für Kunsttechnologie und Konservierung, 2002 ISSN: 0931-7198 beschrieben.

Als Maß für die Kreidungsstufe nach einer bestimmten Zeit dienen Kreidungsabdrücke, die nach DIN 53159 (Kempfstempel-Methode) oder nach DIN 53223 (Klebeband-Methode) erhalten werden.

Oberflächliche Kreidung, die nach einer (künstlichen) Kurzbewitterungsprüfung festgestellt wird, sollte stets differenziert und aus drei Gründen nur in Verbindung mit einem "Vergleichsstandard", dessen Freibewitterungsverhalten bekannt ist, beurteilt werden: Die sehr nah am jeweiligen Prüfling befindliche UV-Lichtquelle beansprucht eine Beschichtung mit einer wesentlich größeren Intensität, als dies in der Praxis meist der Fall ist, diese Strahlung entspricht nicht exakt der natürlichen Wellenlänge des Sonnenlichtes, und der in den Geräten entstehende Ozonanteil schädigt die zu prüfende Beschichtung zusätzlich durch forcierten Bindemittelabbau. Der Vergleichsstandard dient als Referenz zur Beurteilung der Konsistenz verschiedener Messungen.

Vor diesem Hintergrund ist verständlich, dass es eine Vielzahl von Veröffentlichungen gibt, die das Problem des Kreidens durch photokatalytisch aktives Titandioxid in polymeren Beschichtungen durch Senkung der photokatalytischen Aktivität lösen:
So wird beispielsweise in der DE 32 37 264 oder DE 195 03 906 die photokatalytische Aktivität durch eine Behandlung mit Metallchloriden bzw. Silanverbindungen und einer thermischen Nachbehandlung herabgesetzt.
Die DE 37 31 174, DE 43 19 669, DE 44 15 357, DE 195 02 231, DE 195 15 988, DE 195 22 267, DE 196 18 566, DE 199 05 427, EP 0 367 236, EP 0 757 085 sowie DE 38 25 702 oder DE 196 18 563 beschreiben hierzu eine Behandlung mit Metalloxiden bzw. Metallen oder Metallverbindungen.
Aus der DE 41 21 562 oder DE 44 29 797 ist eine Vorbehandlung mit Alkalimetallen zur Senkung der photokatalytischen Aktivität vorbekannt.
Die in diesen Druckschriften offenbarten Titandioxidteilchen sind aufgrund ihrer verringerten photokatalytischen Eigenschaft für Beschichtungszusammensetzungen mit einer gesteigerten photokatalytischen Aktivität unbrauchbar.

Die DE 41 37 764 beschreibt ein Trägermaterial, bei dem Titandioxid als Träger verwendet wird und mit einer Eisenoxidschicht überzogen ist. Diese Teilchen zeigen keine photokatalytische Aktivität.

Daneben gibt es eine Vielzahl von Druckschriften, die photokatalytisch aktives Titandioxid auf einem Substrat beschreiben, das zur Herstellung selbstreinigender Oberflächen aufgrund des niedrigen Kontaktwinkels der Oberfläche mit Wasser verwendet wird.

So beschreibt die DE 196 81 289 die Verwendung eines Verbundwerkstoffes aus einem Träger und einer darauf aufgebrachten photokatalytischen Schicht (TiO₂ in der Anatas-Form oder SₙO₂), wobei die photokatalytisch wirksame Schicht durch Bestrahlung mit Sonnenlicht hydrophil gemacht wurde. Als Substrate werden bevorzugt Fensterscheiben verwendet; die Aufbringung auf verschiedene Substrate von photokatalytisch aktiven Teilchen in einer polymeren Bindemittelmatrix, die Füllstoffe enthält, ist nicht beschrieben.
Die DE 198 02 392 beschreibt das Aufbringen von photokatalytisch wirksamem TiO₂ auf einem anorganischen Substrat (Glas) unter Verwendung anorganischer Bindemittel (Silanverbindungen).
Aus der EP 0 966 409 und EP 0 968 143 sind auf eine Glasoberfläche aufgebrachte photokatalytisch wirksame TiO₂-Teilchen bekannt. Die TiO₂-Teilchen werden während der Glasherstellung im Zinnbad aufgebracht. Als Bindemittel wird das Glas selber verwendet.
In der EP 0 850 203 werden Verbundwerkstoffe offenbart, bei denen die photokatalytisch wirksamen TiO₂-Teilchen auf dem Träger mit Hilfe eines anorganischen Bindemittels fixiert sind.
In der EP 1 027 924 ist ein photokatalytisch wirksames Titandioxid mit einer speziellen Gitterstruktur beschrieben. Als Substrate werden ausschließlich nicht polymere Substrate genannt.
In der EP 1 153 001 ist ein Verfahren zur Ablagerung von Dispersionen von Titandioxid-Teilchen offenbart, um in der Kälte photokatalytische Beschichtungen auf der Oberfläche eines Substrates zu bilden. Hierzu wird das mit TiO₂ beschichtete Substrat anschließend mit mindestens einer Silikonverbindung nachbehandelt. Als Substrate sind auch hier ausschließlich nicht polymere Werkstoffe genannt.
Aus der EP 1 340 715 ist die Herstellung einer photokatalytisch wirksamen TiO₂-Schicht auf einem inerten Substrat mit anisotroper Geometrie (Glas-Flakes) bekannt, bei dem kein Bindemittel verwendet wird, um die TiO₂-Teilchen auf dem Substrat aufzubringen.

Diesen Druckschriften ist gemeinsam, dass die Einarbeitung dieser photokatalytisch wirksamen Titandioxidteilchen oder -verbundwerkstoffe in eine polymere Beschichtungszusammensetzung nicht genannt ist.

Auch die DE 10 2004 011 213 beschreibt eine selbstreinigende Oberfläche insbesondere auf Felgen. Dort wird darüber hinaus ausgesagt, dass bei Verwendung organischer Substrate wie Kunststoffen, Lacken und Farben zusammen mit photokatalytisch aktivem Titandioxid eine spezielle Schutzschicht auf anorganischer Basis (Silanverbindung) benötigt wird, um eine Schädigung des organischen Substrats durch radikalische Oxidation (= Kreiden) zu vermeiden.

Die DE 199 11 738 beschreibt mit photokatalytisch wirksamem TiO₂ beschichtete Materialien zur Reinigung von Abwässern. Das TiO₂ wird zur Anregung mit sichtbarem Licht mit Eisenionen dotiert.

In der EP 0 784 034 ist ein Titandioxidfilm mit photokatalytischer Wirkung offenbart. Dieser Titandioxidfilm kann mit organischen Lacken überzogen werden, allerdings zeigt dann der Titandioxidfilm keine photokatalytische Aktivität mehr. Eine Dispersion von photokatalytisch aktiven Teilchen in einer Polymermatrix ist nicht offenbart.

Aus der DE 10 2005 057 747 und DE 10 2005 057 770 sind in einer organischen Bindemittelmatrix enthaltende photokatalytisch wirksame, speziell hergestellte Titandioxidteilchen bekannt, die in verschiedenen Bindemittelmatrizes, u.a. Polyacrylate, Silikate, Polysiloxane und sogenannte "Nanocomposit-Bindemittel", dispergiert sind und zur Reduzierung der Luftverschmutzung auf öffentlichen Flächen, zur Reduzierung der Atemluftbelastung in Gebäuden und zur Verringerung der Verschmutzung von Fassaden verwendet werden. Diese speziell hergestellten Titandioxidteilchen weisen auch bei geringem UV-Anteil eine photokatalytische Aktivität auf, die aus der Dotierung der TiO₂-Teilchen mit Kohlenstoff, Stickstoff oder Schwefel resultiert. Diese Entgegenhaltungen verwenden zur Herstellung kreidungsbeständiger Beschichtungszusammensetzungen ausschließlich anorganische Bindemittel. Auf organische Bindemittel basierende Zusammensetzungen, die entsprechend der DE 10 2005 057 747 oder DE 10 2005 057 770 erhältlich sind, zeigen unter UV-Bestrahlung erhebliche Zersetzung durch Kreiden.

Aufgabe der vorliegenden Erfindung ist die Bereitstellung eines Pigments, dass in einer polymeren Beschichtungszusammensetzung mit einer hohen photokatalytischen Aktivität verwendet werden kann, wobei die Kreidungsbeständigkeit gegenüber vergleichbaren photokatalytisch aktiven Substanzen erheblich gesenkt werden kann. Die Kreidungsbetändigkeit soll dabei so hoch sein, dass die erfindungsgemäß hergestellten Beschichtungszusammensetzungen für Außenfassadenfarben uneingeschränkt Verwendung finden. Die photokatalytische wirksame Substanz darf dabei nicht durch die zuvor beschriebenen Maßnahmen des Standes der Technik (Calcinieren, Belegen mit Metallen, Metalloxiden etc.) herabgesetzt werden. Als Bindemittel sollen insbesondere alle gängigen, d.h. auch kreidungsanfälligen Bindemittel (wie z.B. Polyacrylate) Verwendung für die resultierende photokatalytisch aktive Beschichtung finden.

Diese unter Verwendung eines solchen Pigments hergestellten Beschichtungszusammensetzungen sollen universell verwendbar sein und die zuvor beschriebenen Nachteile des Standes der Technik überwinden.

Diese Aufgabe wird erfindungsgemäß gelöst durch die Verwendung von Composit-Teilchen,
- welches ein anorganisches Trägerteilchen mit überwiegend isotroper Geometrie und mit einer mittleren Teilchengröße zwischen 0,1 µm und 100 µm aufweist;
- wobei die Oberfläche dieses anorganischen Trägerteilchens mit einer photokatalytisch aktiven Substanz mit einer mittleren Teilchengröße bzw. Schichtdicke der Oberflächenbelegung zwischen 1 nm und 300 nm ganz oder teilweise bedeckt ist.

Die Bezeichnung "photokatalytisch aktive Substanz" bedeutet, dass die photokatalytische Aktivität dieser Substanz nicht durch chemische oder physikalische Verfahren verringert wurde. Folglich handelt es sich bei der erfindungsgemäß zu verwendenden photokatalytisch aktiven Substanz um eine solche, die durch eine Abscheidung von TiO₂-Nanopartikeln bzw. eine Oberflächenbeschichtung mit TiO₂ auf inerten anorganischen Trägermaterialien entsteht. Diese Substanz wird nicht durch Behandlung mit Metallchloriden, Silanverbindungen, Metalloxiden, Metallionendotierungen oder einer thermischen Nachbehandlung hergestellt.

Die Bezeichnung "überwiegend isotrope Geometrie" bedeutet, dass die Trägerteilchen keine besonders ausgeprägte Vorzugsrichtung oder Geometrie haben. Beispiele für anorganische Trägerteilchen mit überwiegend isotroper Geometrie sind CaCO₃-Teilchen oder TiO₂-Teilchen.
Durch diese Eigenschaft wird ausgeschlossen, dass Trägermaterialien mit überwiegend plättchen- oder nadelförmiger Geometrie (wie z.B. Glimmer) Verwendung finden. Die Form der Trägermaterialien hat einen entscheidenden Einfluß auf die photokatalytische Aktivität und die Eignung der Composit-Teilchen in den fertigen Beschichtungen: Composit-Teilchen mit einem anorganischen Trägermaterial mit anisotroper Geometrie führen im Gegensatz zu solchen mit überwiegend isotroper Geometrie zu einer verringerten photokatalytischen Aktivität sowie zu einer höheren Brüchigkeit, geringerer Wasser- und Wasserdampfdurchlässigkeit und verschlechterten Haftung der ausgehärteten Beschichtungsschicht.

Mit dem erfindungsgemäßen Composit-Teilchen ist es überraschenderweise möglich, Beschichtungen herzustellen, bei denen eine photokatalytisch aktive Substanz in eine polymere Bindemittelphase eingearbeitet wird, die im Stand der Technik als besonders kreidungsanfällig beschrieben wurde, ohne dass spezielle, kreidungsbeständige Bindemittel, wie z.B. Polysiloxane oder anorganische Silikate, verwendet werden müssen.

Fertige Beschichtungen, insbesondere solche auf Basis üblicher polymerer Bindemittel, die die erfindungsgemäßen Composit-Teilchen als photokatalytisch aktive Substanz erhalten, zeichnen sich durch eine hohe Kreidungsbeständigkeit aus.

Bei einer mittleren Teilchengröße des anorganischen Trägerteilchens von weniger als 0,1 µm würde wiederum zu starkes Kreiden auftreten, bei mehr als 100 µm würden die mechanischen und bauphysikalischen Eigenschaften der resultierenden Lacksysteme (z.B. Wasser- und Wasserdampfdurchlässigkeit, Scheuerbeständigkeit, Brüchigkeit etc.) negativ beeinflußt, zu grobe Partikel würden aus der Oberfläche herausragen.
Die mittlere Teilchengröße bzw. Schichtdicke der Oberflächenbelegung der photokatalytisch aktiven Substanz von 1 nm ist notwendig, um eine Absorption der Strahlung zu ermöglichen. Die Obergrenze von 300 nm gewährleistet die Entstehung einer reaktiven und effizienten Oberflächenschicht, die die durch Absorption erzeugten Ladungen direkt an die Oberfläche des Partikels und damit an die Grenzfläche zur verschmutzten Außenwelt liefert.

Gemäß einer besonders bevorzugten Ausführungsform der Erfindung ist die photokatalytisch aktive Substanz in nicht agglomerierter Form auf das Trägerteilchen aufgebracht. Diese Ausführungsform zeigt die besten Ergebnisse im Hinblick auf die Verbesserung der Vergilbungs- und Kreidungsbeständigkeit und findet vorzugsweise bei Fassadenfarben Anwendung.

Gemäß einer bevorzugten Ausführungsform der Erfindung weist das Composit-Teilchen zusätzlich ein Bindemittel auf, das aus der Härtung und/oder Vernetzung einer organischen Siliciumverbindung, insbesondere einem Siliciumalkoxylat, resultiert. Ganz besonders bevorzugt ist Tetraethoxysilan.

Gemäß einer bevorzugten Ausführungsform der Erfindung weist das anorganische Trägerteilchen eine BET-Oberfläche zwischen 0,1 und 20 m²/g auf, wobei die photokatalytisch aktive Substanz eine BET-Oberfläche zwischen 1 und 350 m²/g haben kann. Besonders bevorzugt ist die photokatalytisch aktive Substanz erhältlich aus einem stabilisierten Sol (z.B. TiO₂)
Innerhalb dieser Grenzen der BET-Oberflächen ist die stärkste photokatalytische Aktivität der resultierenden Beschichtungen zu beobachten.

Die vorliegende Erfindung betrifft des Weiteren die Verwendung der zuvor offenbarten Composit-Teilchen in einer Matrix aus Bindemitteln zur Erhöhung der Kreidungsbeständigkeit einer photokatalytisch aktiven Beschichtungszusammensetzung.

Hierbei ist zu beachten, dass die erfindungsgemäß verwendeten Composit-Teilchen nicht direkt auf ein vorhandenes Substrat aufgebracht werden, sondern zuerst in eine Bindemittel-matrix eingearbeitet und dann auf diverse Substrate aufgebracht werden. Unter dem Begriff "Substrat" wird hier der makroskopische, zu beschichtende Gegenstand verstanden.

Die erfindungsgemäße Verwendung auf Basis der Composit-Teilchen führt zu resultierenden Beschichtungen, die sich - neben der erfindungsgemäß geforderten Kreidungsbeständigkeit und einer uneingeschränkten photokatalytischen Aktivität - durch sämtliche Eigenschaften auszeichnen, die für eine Applikation auf Gebieten mit einem hohen Eigenschaftsprofil gefordert werden, u.a. durch exzellente Adhäsion auf mineralischen Substraten, hohe Lösemittelresistenz, schnelle und geringe Wasseraufnahme mit geringer Quellung und Weissanlaufen und schnelle Filmbildung.
Die mit den erfindungsgemäßen Composit-Teilchen erhältlichen Beschichtungen finden überall dort Verwendung, wo photokatalytisch wirksame Beschichtungen von besonderem Interesse sind. Es handelt sich allgemein um Beschichtungen, mit denen Luftverschmutzung wirksam abgebaut, die Belastung von Schadstoffen in Innenräumen reduziert, sowie die Verschmutzung von Oberflächen, wie z.B. Innenwänden oder Gebäudefassaden, reduziert werden kann.
Als Substrate eignen sich die entsprechenden nutzbaren Flächen, so z.B. die Innenwände von Gebäuden zur Reduzierung der Atemluftbelastung, Gebäudeaußenflächen zur Verringerung der Verschmutzung von Gebäudefassaden, oder auch öffentliche Flächen wie z.B. Fahrbahnen, Gehwege und öffentliche Plätze zur Reduzierung der Luftverschmutzung.

Die Matrix aus Bindemitteln kann erhältlich sein durch Härten und/oder Vernetzen aus anorganischen oder organischen Monomeren oder vernetzungsfähigen Materialien oder deren Mischungen.

Besonders bevorzugt ist eine Matrix, die überwiegend aus organischen Bindemitteln besteht. Unter der Bezeichnung "überwiegend organische Bindemitteln" wird verstanden, dass der Anteil an organischen Bindemitteln in der Beschichtungsrezeptur zwischen 5 und 50 Gew.-%, bezogen auf den Festkörper, beträgt.
Unter der Bezeichnung "organischen Bindemittel" werden solche Bindemittel verstanden, die im Backbone ausschließlich Kohlenstoffatome und Heteroatome wie N, O und S aufweisen. Unter diesem Begriff werden nicht solche Bindemittel verstanden, die im Backbone beispielsweise Si-Atome aufweisen (wie z.B. bei Polymeren, erhältlich durch Vernetzung von Silan- oder Siloxanverbindungen).
Als organische Bindemittel eignen Polymere auf Basis von
- Polymerisationsharzen wie Polyacrylate und Methacrylate, Polystyrole und dessen Copolymere, Polyvinylether, Polyvinylacetale, Polyvinylalkohole, Polyvinylether, PVC und dessen Derivate, Polyolefine und deren Derivate, Kohlenwasserstoffharze,
- Polyadditionsharzen wie Polyurethane, Epoxyharze oder Phenoxyharze
- Polykondensationsharzen wie Polyester, Alkydharze, ungesättigte Polyester, Phenolharze, Aminoplaste oder Ketonharze
- natürliche Bindemittel
Die verwendeten Bindemittel können oxidativ, thermisch oder durch Strahlung vernetzbar sein.

Ganz besonders bevorzugt werden als organische Bindemittel Polymerisationsharze verwendet, insbesondere solche aus der Gruppe der Polyacrylate, Methacrylate, Polystyrole und dessen Copolymere, Polyvinylether, Polyvinylacetale, Polyvinylalkohole und Polyvinylether. Als nicht bzw. nicht rein organische Bindemittel eignen sich besonders Polymere auf Basis von
- Siliconharzen
- Alkalisilikaten, Wasserglas und Kieselsäureestern
- Nanokomposite, bestehend aus anorganischen Nanopartikeln, die mit Polymeren vernetzt sind

Bezogen auf das Gesamteigenschaftsniveau der resultierenden Beschichtung ist eine solche Matrix aus Bindemitteln bevorzugt, die ganz oder teilweise aus organischen Bindemitteln besteht (im Gegensatz zu rein anorganischen Matrizes).
Die Verwendung rein anorganischer Bindemittelmatrices und organischen Additiven ist ebenso möglich.

Besonders bevorzugt beträgt der Anteil an erfindungsgemäßen Composit-Teilchen in der resultierenden Beschichtung zwischen 0,1 und 50 Gew.-% der Beschichtungszusammensetzung, ganz besonders bevorzugt zwischen 1 und 15 Gew.-%, bezogen auf die Gesamtformulierung der Beschichtung.
Dieses Verhältnis von Composit-Teilchen zu Bindemittel-Matrix ist für eine möglichst breite Auswahl an zu verwendenden Bindemitteln optimal, ohne dass zu starke Abstriche hinsichtlich der geforderten erfindungsgemäßen Eigenschaften gemacht werden müßten.

Gemäß einer bevorzugten Ausführungsform der Erfindung liegen die erfindungsgemäßen Composit-Teilchen in der organischen Bindemittelmatrix in überkritisch verteilter Form vor.

Unter der Bezeichnung "überkritisch verteilter Form" wird verstanden, dass der Anteil an Composit-Teilchen, Pigmenten und Füllstoffen in der resultierenden Beschichtung so hoch ist, dass die Composit-Teilchen nicht mehr vollständig von dem Bindemittel umgeben sind. In diesem Fall wird eine poröse Beschichtung gebildet, mit der ein zuverlässiger Kontakt zwischen dem photokatalytisch zu behandelnden Material und dem photokatalytisch wirksamen Mittel sichergestellt werden kann.
Dies ist beispielsweise dann der Fall, wenn der Anteil an Composit-Teilchen 5 Gew.-%, Pigmente 12 Gew.-%, Füllstoffe 35 Gew.-% und der Bindemittelanteil 18 Gew.-%, bezogen auf die Beschichtungsrezeptur, beträgt. Die genaue Berechnung der Schwelle für eine überkritische Verteilung hängt von der Gesamtoberfläche aller verwendeten Pigmente und Füllstoffe ab und kann vom Fachmann aufgrund der eingesetzten Ausgangsmaterialien bestimmt werden.

Die folgenden Beispiele dienen der Erläuterung der Erfindung, ohne diese zu begrenzen.

### Beispiele:

### Beispiel 1 (erfindungsgemäß):

100 g Omyacarb^{®} 5 GU (CaCO₃ mit einem mittleren Teilchendurchmesser von 5 µm, eingetragene Marke der Omya California Inc.) und 20 ml Tetraethoxysilan werden in 200 ml VE-Wasser mit Hilfe eines Dissolvers bei 2.000 U/Min. suspendiert. In einem weiteren Becherglas werden 100 g nanofeines TiO₂ (Hombikat^{®} UV100, erhältlich von der Sachtleben Chemie GmbH) und 20 ml Tetraethoxysilan in 200 ml Wasser suspendiert. Nach 10 Minuten werden die beiden Reaktionslösungen vereinigt und weitere 3 Stunden bei 2.000 U/Min. gerührt. Das Reaktionsgemisch wird über Nacht stehen gelassen, danach abdekantiert und mit 500 ml VE-Wasser erneut eine Stunde lang dispergiert. Die Suspension wird anschließend in einer Abdampfschale im Trockenschrank bei 105 °C eingedampft, das Produkt gemörsert und ausgewogen. Es stehen 145 g zur Verfügung.
Bei dem Produkt handelt es sich um ein in agglomerierter Form vorliegendes nanoskaliges photokatalytisch aktives TiO₂, welches auf vorwiegend isotrope Trägerteilchen aus CaCO₃ aufgebracht wurde.

Die folgenden REM-Aufnahmen zeigen das erfindungsgemäße Produkt:

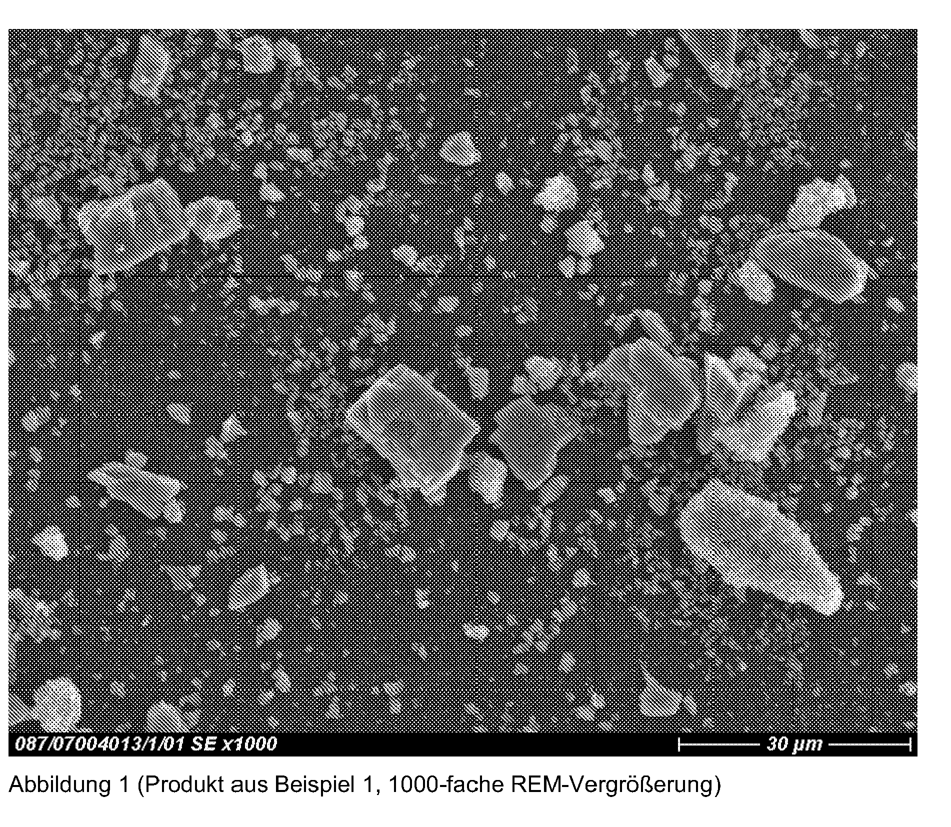

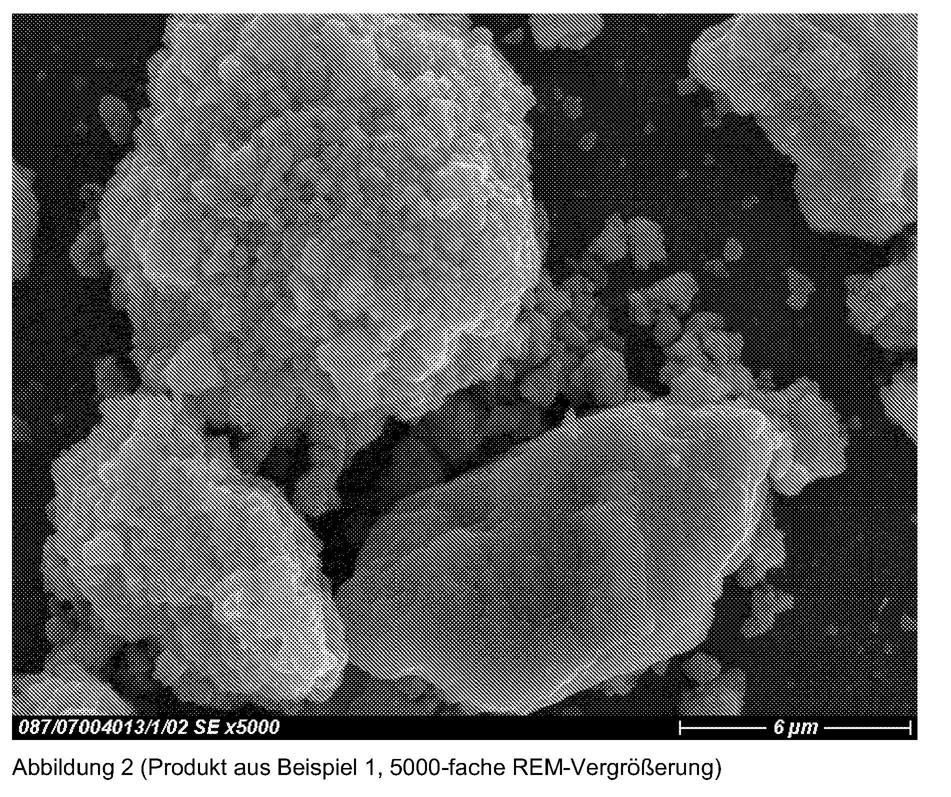

Aus den REM-Aufnahmen ist erkennbar, dass Teile des CaCO₃-Trägermaterials mit nanoskaligem TiO₂ bedeckt sind. Daneben sind nicht unerhebliche Mengen an nanoskaligem TiO₂ zu sehen, die nicht auf der Oberfläche der Trägerteilchen aufgebracht sind, sondern in agglomerierter Form neben den CaCO₃-Trägerteilchen liegen.

### Beispiel 2 (erfindungsgemäß):

100 g Omyacarb 5 GU (CaCO₃ mit einem mittleren Teilchendurchmesser von 5 µm, eingetragene Marke der Omya California Inc.) werden in 200 ml VE-Wasser mit Hilfe eines Dissolvers bei 2000 U/Min. suspendiert. Nach 10 Minuten werden über 10 Minuten hinweg 100 g eines TiO₂-Sols (Hombikat XXS 100, mittelere Teilchengröße < 10 nm, erhältlich von der Sachtleben Chemie GmbH) zugegeben und der pH-Wert mit 20%iger Natronlauge bei pH 8,5 +- 1,5 gehalten. Es wird noch weitere 45 Minuten gerührt, dann der Reaktionsansatz 5 Stunden reifen gelassen und anschließend das Reaktionsgemisch bei 105 °C im Trockenschrank über Nacht eingedampft. Das Produkt wird gemörsert und ausgewogen. Es stehen 120 g zur Verfügung.

Bei dem Produkt handelt es sich um ein in nicht agglomerierter Form vorliegendes nanoskaliges photokatalytisch aktives TiO₂, welches auf vorwiegend isotrope Trägerteilchen aus CaCO₃ aufgebracht wurde.

Die folgenden REM-Aufnahmen zeigen das erfindungsgemäße Produkt:

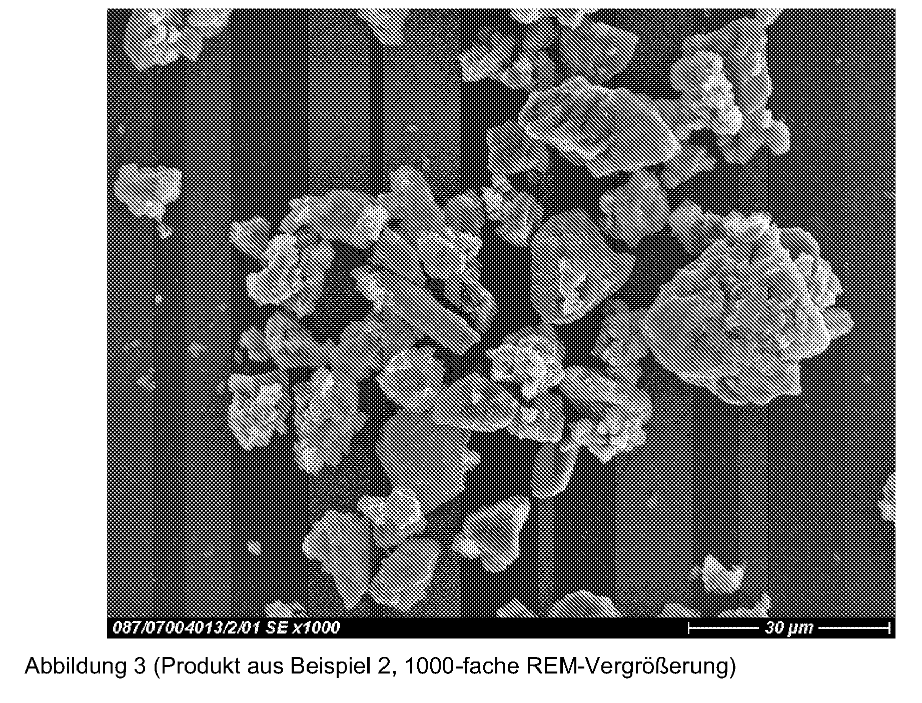

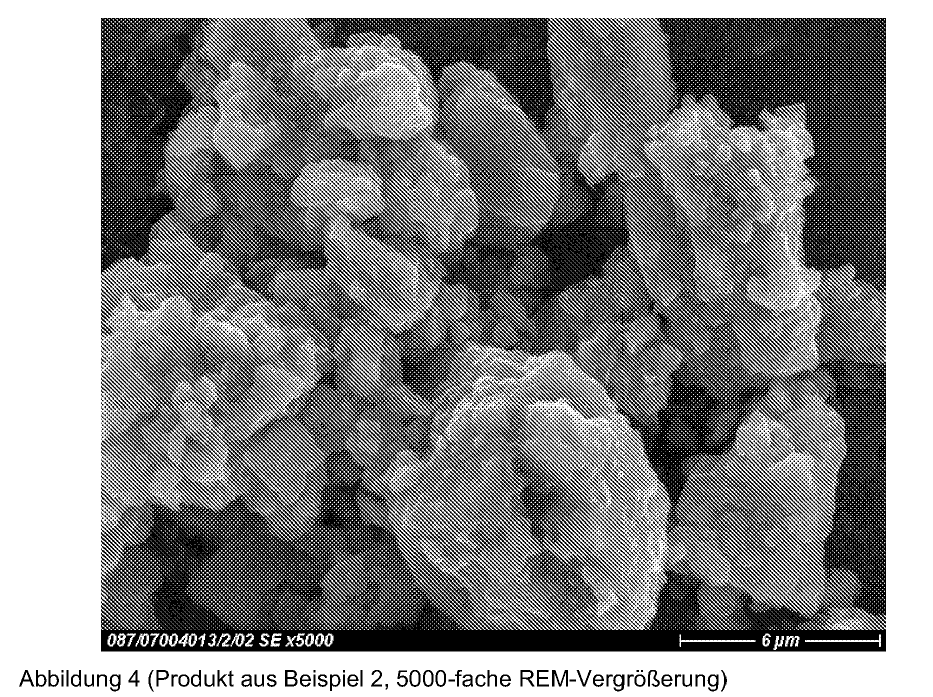

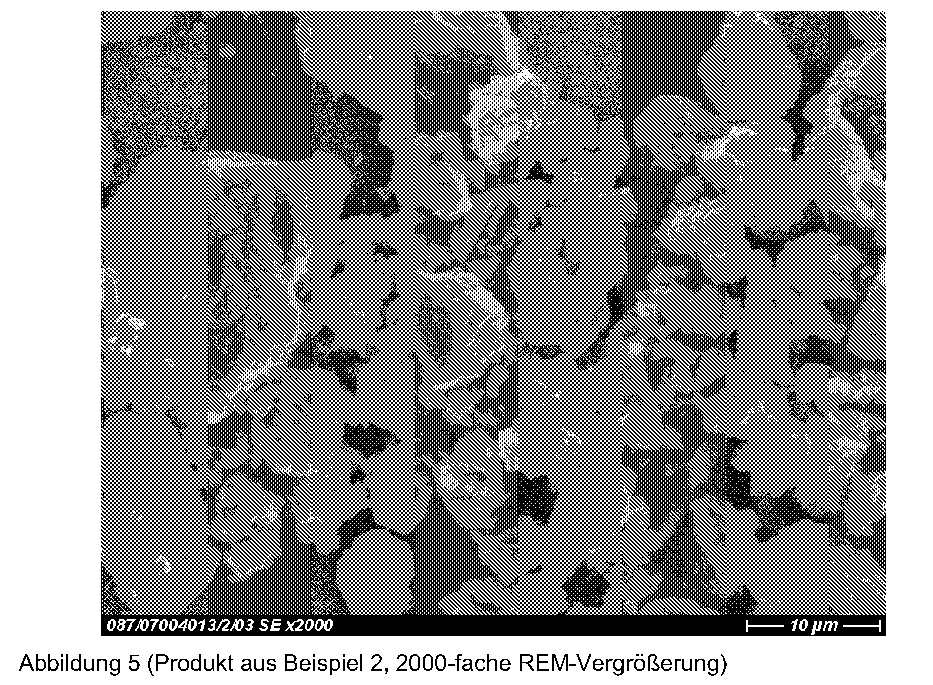

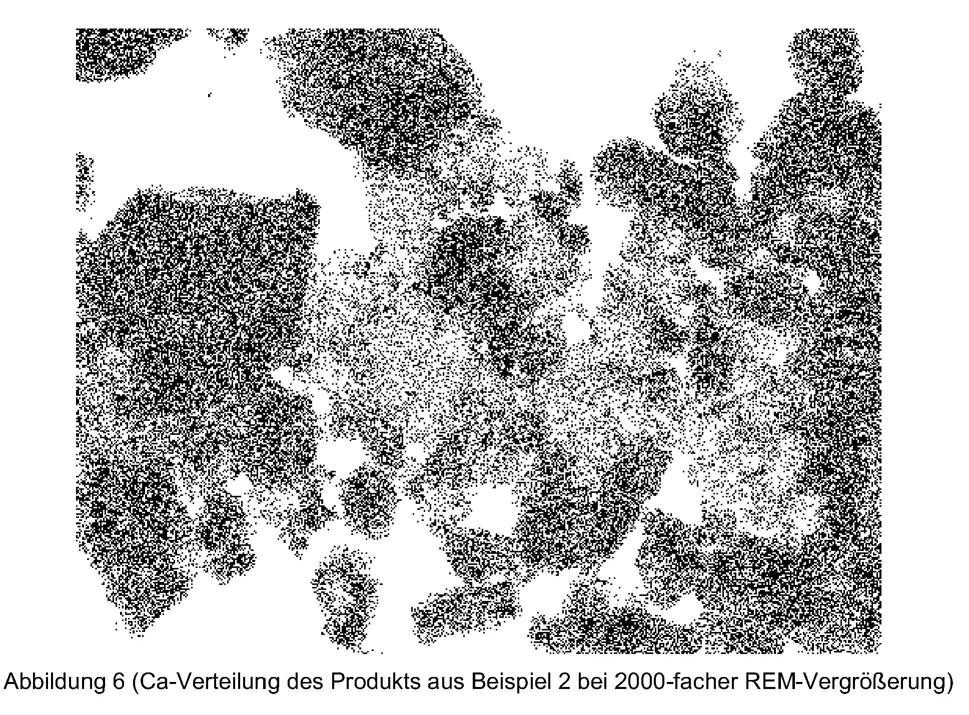

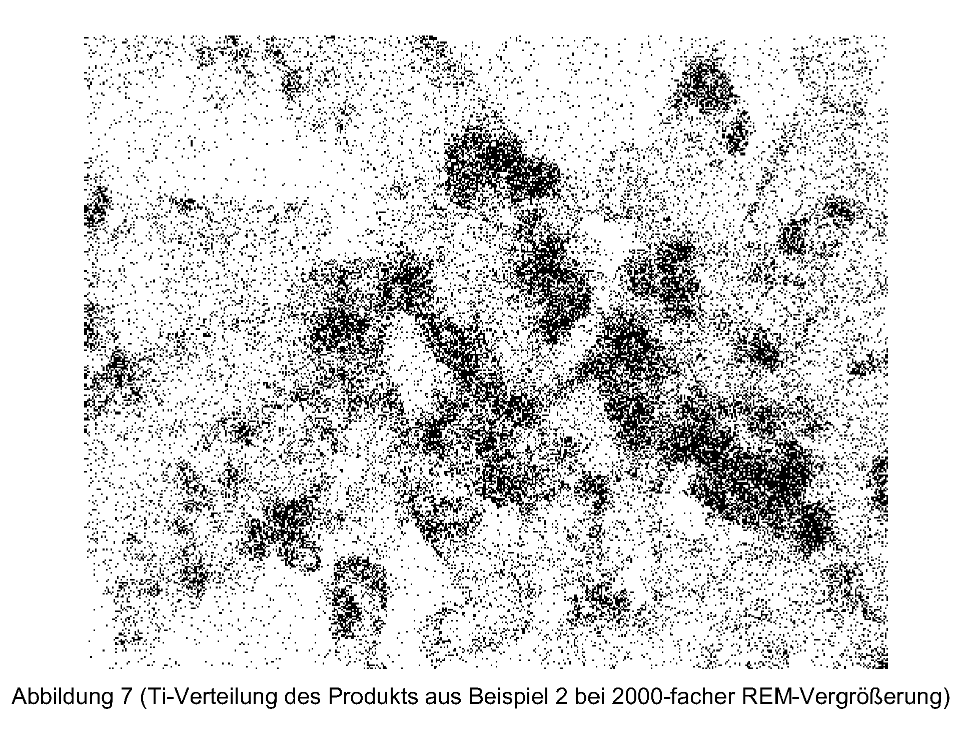

Die Elementeverteilung zeigt eine gleichmäßige Ca- und Ti-Verteilung auf den Composit-Teilchen, darüber hinaus ist aus den REM-Aufnahmen erkennbar, dass keine nennenswerten Anteile an nanoskaligem TiO₂ vorhanden sind, die nicht auf der Oberfläche der Trägerteilchen aufgebracht sind.

### Beispiel 3 (Vergleichsprobe):

Bei dem Produkt handelt es sich um agglomeriertes, nanoskaliges photokatalytisch aktives TiO₂ mit einer BET von 300 m²/g (Hombikat^{®} UV100, erhältlich von der Sachtleben Chemie GmbH), das nicht auf ein CaCO₃-Trägermaterial aufgebracht wurde.

### Beispiel 4 (Nullprobe):

Zum Vergleich des Kreidens und der Photoaktivität wird kein Photokatalysator in der Beschichtungsformulierung verwendet.

### Beispiel 5 (Vergleichsprobe)

Zum Vergleich des Kreidens und der Photoaktivität wird eine am Markt erhältliche photokatalytisch aktive Farbe eingesetzt (Photosan, Fa Sto).

### Beschichtungsbeispiele:

Unter Verwendung der in den zuvor beschriebenen Beispielen 1 bis 4 hergestellten Composit-Teilchen bzw. Vergleichs- und Nullprobenteilchen werden Lackformulierungen 1 bis 4 hergestellt, die einer üblichen Wandfarbe für den Innenbereich entsprechen.

Die zur Herstellung der Lackformulierungen verwendeten Bestandteile sind in der folgenden Tabelle wiedergegeben:

**Tabelle 1 (Lackformulierungen)**

| **Lackbeispiel** | **1** | **2** | **3** | **4** |
|---|---|---|---|---|
| TE-Wasser (teilentsalztes Wasser) | 295 | 295 | 295 | 295 |
| Lopon 895 (Dispergiermittel der Fa. BK Giulini Chemie) | | 2 | 2 | 2 |
| Calgon N (Dispergier- und Netzmittel der Fa. BK Giulini Chemie) | | 2 | 2 | 2 |
| Actizide MBS (Additiv der Fa. Thor Chemie) | | 2 | 2 | 2 |
| Actizide MKA | | | | |
| (Biozid der Fa. Thor Chemie) Walocell XM 20000 PV | | 2 | 2 | 2 |
| (Verdicker der Fa. Wacker Chemie) Wacker Silfoam SD 860 | | 3 | 3 | 3 |
| (Entschäumer der Fa. Wacker Chemie) Lusovan FBH | | 3 | 3 | 3 |
| (Koaleszierhilfsmittel der Fa. BASF) | 10 | 10 | 10 | 10 |
| Ammoniak konz. (25%ig) | | 1 | 1 | 1 |
| *Zwischensumme* | 320 | 320 | 320 | 320 |
| Hombitan R 210 | | | | |
| (Weißpigment der Fa. Sachtleben Chemie) | 120 | 120 | 120 | 120 |
| | | | | |
| Hombikat UV 100 auf CaCO₃ | 80* | | | |
| Hombikat XXS100 auf CaCO₃ | | 80* | | |
| Hombikat UV 100 | | | 50 | |
| | | | | |
| Omyacarb 5 GU | | | | |
| (CaCO₃ der Fa. Omya) | 140 | 140 | 170 | 205 |
| Plastorit 000 | | | | |
| (Extender 14 µm, d50 der Fa. Zuzenac) | 80 | 80 | 80 | 80 |
| Steopac | | | | |
| (Extender 2,1 µm, d50 der Fa. Zuzenac) | 40 | 40 | 40 | 40 |
| OpTiMat 2550 | | | | |
| (Mattiermittel der Fa. World Minerals) | 12 | 12 | 12 | 12 |
| | | | | |
| Silres BS 45 | | | | |
| (Siliconbindemittel der Fa. Wacker Chemie) | 93 | 93 | 93 | 93 |
| Vinapas SAF 54 W | | | | |
| (Dispergierharz der Fa. Wacker Chemie) | 95 | 95 | 95 | 95 |
| Tafigel PUR 40 (1:9 in H2O) | | | | |
| (Rheologiehilfsmittel der Fa. Münzing Chemie) | 20 | 20 | 20 | 20 |
| *Zwischensumme* | 680 | 680 | 680 | 665 |
| Gesamtsumme | 1000 | 1000 | 1000 | 985 |
| Gesamt PVK (%) | 59,8 | 59,8 | 59,8 | 59,9 |
| Hombikat PVK ( %) | | | 5,1 | |

| | | | | |
|---|---|---|---|---|
| *: 80 g entsprechen etwa 30 g an photokatalytisch aktivem TiO₂ | | | | |

### Herstellung der Lackformulierungen:

In einem Becherglas werden am Dissolver die Komponenten in der o.g. Reihenfolge einzeln langsam zugegeben und eindispergiert. Nach erfolgter Zugabe wird weitere 15 min bei einer Umlaufgeschwindigkeit von 12 m / min dispergiert.

### Applikation der Lackformulierungen und durchgeführte Tests:

Die Lackformulierungen 1 bis 5 wurden mit 200 µm Nassfilmschichtdicke auf einen Kontrastkarton (Fa. Lineta, opacity charts 14H) mit einem automatischen Aufziehgerät der Fa. Byk Gardner aufgebracht. Nach Trocknen über Nacht bei Umgebungstemperatur wurden die Kartons einem Berauchungstest unterzogen sowie das Kreiden und die Farbtonveränderung bestimmt.

Als Vergleichslack wurde eine handelsübliche Farbe Photosan^{®} (der Fa. Sto AG), enthaltend photokatalytisch aktives TiO₂, wie zuvor beschrieben auf Karton aufgezogen (Lack bzw. Karton 5).

### Berauchungstest:

In einem leeren Glasaquarium mit 10 1 Fassungsvermögen werden die Kartons 1 bis 5 aufgestellt. Die Öffnung des Aquariums wird mit einem Kunststoffdeckel verschlossen, der eine Öffnung zur Aufnahme einer Zigarette und eine weitere Öffnung zum Anschluß einer Wasserstrahlpumpe aufweist. Der Test beginnt mit dem Abrauchen von 2 Zigaretten (Marke West) innerhalb einer Zeit von 30 Minuten. Danach werden weitere zwei Zigaretten innerhalb von weiteren 30 Minuten abgeraucht.
Nach dem Abrauchen wurden die Kartons aus dem Aquarium entnommen und eine Stunde in einem nicht-berauchten Raum stehen gelassen. Danach folgte ein oleofaktorischer Test, ob die Kartons einen für den Menschen wahrnehmbaren Zigarettenrauch aufwiesen. Anschließend wurden die Kartons einer Kurzbewitterung (über 100 h) im Q-SUN XE-3-HS (der. Fa. Q-Panel) nach DIN EN ISO 11341 (Bestimmung der Entfärbung) unterzogen.

### Bestimmung der Kreidung und der Farbtonveränderung:

Zur Bestimmung der Kreidung wurden die Lackformulierungen durch dreimaligen Anstrich auf vorbereitete Faserzementplatten (Abmessungen 7 x 14 cm) appliziert. Für eine weitere Untersuchung wurden die Lackformulierungen gelb eingefärbt. Hierzu wurden 50 g der Lackformulierungen mit 0,24 g Colanyl-Gelb 10 G 130 (Azo-Pigment der Fa. Clariant) eingefärbt. Nach Trocknen über Nacht bei Umgebungstemperatur wurden die Platten einer Kurzbewitterung (über 100 h) im Q-SUN XE-3-HS (der. Fa. Q-Panel) unterzogen. Die abschließende Beurteilung erfolgte nach Helmen (DIN 53223).

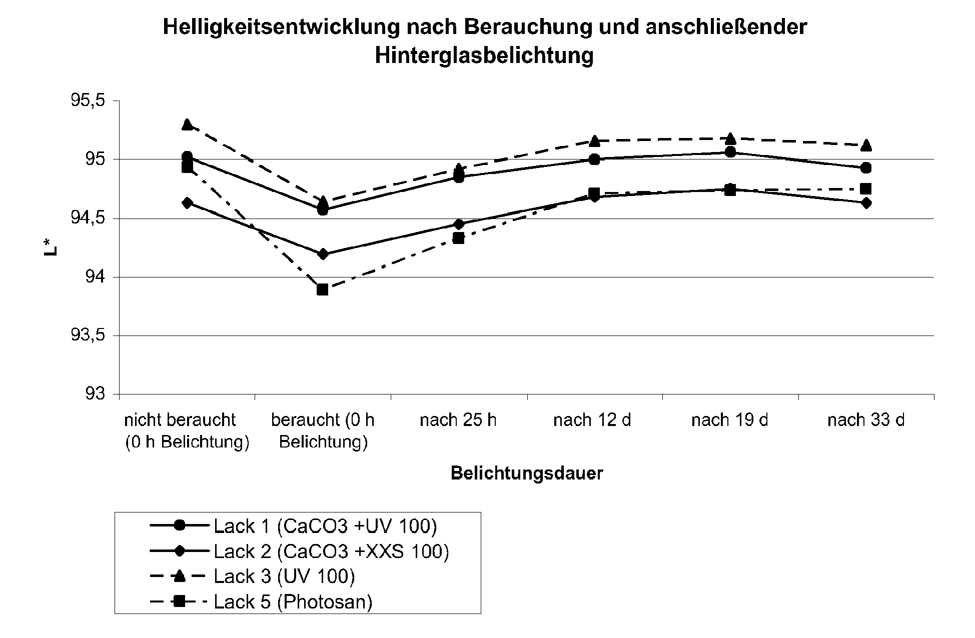

Dieses Diagramm zeigt, dass nach der Berauchung (ohne Belichtung) die stärkste Helligkeitsabnahme beim Vergleichslack 5 festzustellen ist.
Die Rückbildung des ursprünglichen Helligkeitswerts ist bei den erfindungsgemäßen Lacken 1 und 2 nach 25 h deutlich schneller, als beim Lackbeispiel 5 und der Vergleichsprobe (Lackbeispiel 3).
Die oleofaktorische Probe hat ergeben, dass nur bei den Vergleichslacken 4 und 5 starker Zigarettenrauch wahrnehmbar ist.

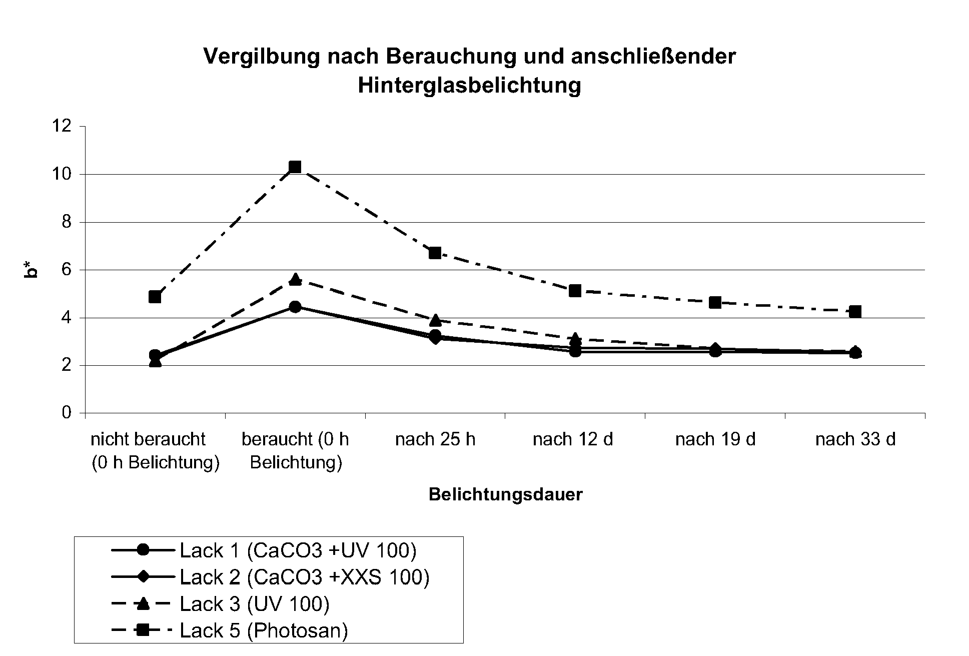

Dieses Diagramm zeigt sehr deutlich, dass beim Lackbeispiel 5 vor der Berauchung bereits eine stärkere Gelbfärbung festzustellen ist. Nach der Berauchung nimmt die an den CIELAB b*-Werten erkennbare Vergilbung stark zu.
Bei den erfindungsgemäßen Lacken 1 und 2 weisen sie geringste Vergilbung (Werte liegen in der Abbildung aufeinander) auf und zeigen auch während des Berauchungs- und Bewitterungstests die besten Werte.

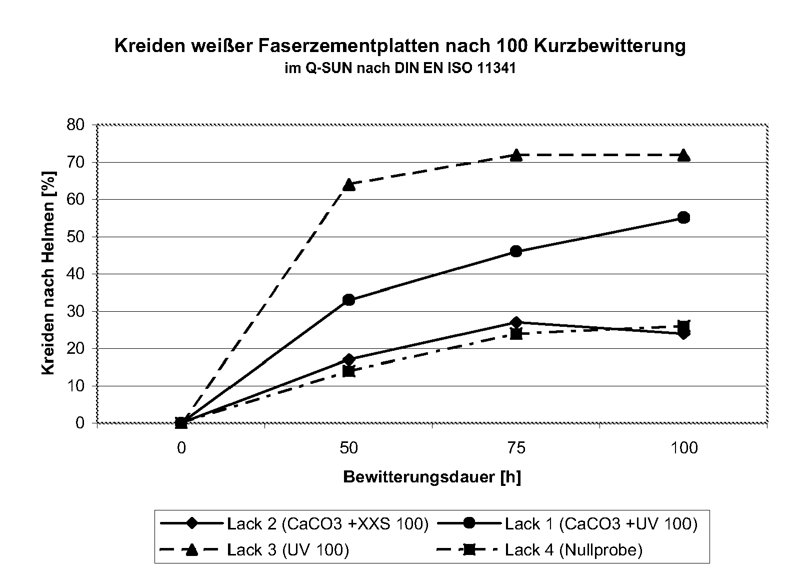

Dieses Diagramm zeigt eine erste Beurteilung der Kreidung. Dabei zeigt sich, dass das auf einem Trägermaterial aufgebrachte nanoskalige, photokatalytisch wirksame TiO₂ die Kreidungsbeständigkeit erhöht.
Das in nichtagglomerierter Form auf das CaCO₃-Trägerteilchen aufgebrachte TiO₂ zeigt gegenüber dem in agglomerierter Form aufgebrachten TiO₂ eine nochmals verbesserte Kreidungsbeständigkeit.
In vorangegangen Versuchen wurde die Kurzbewitterung von Probe 5 (Photosan) nach 50 h wegen starkem Kreiden ( > 30%) abgebrochen und daher hier nicht erneut eingesetzt.

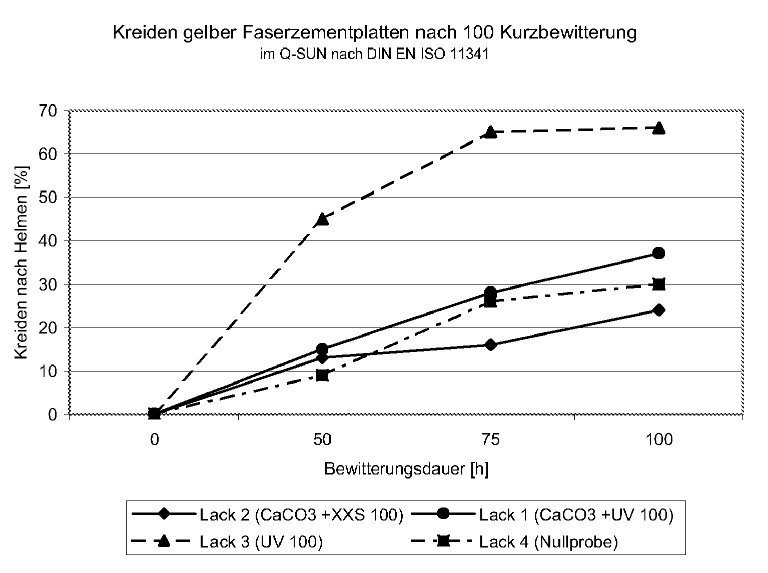

Bei dieser Untersuchung ist das Kreiden aufgrund der Einfärbung besser zu erkennen. Die erfindungsgemäßen Composit-Teilchen haben einen entscheidenden Einfluß auf die Kreidungsbeständigkeit. Die besten Ergebnisse werden mit Composit-Teilchen erzielt, die aus nicht agglomerierten TiO₂ erhalten werden.

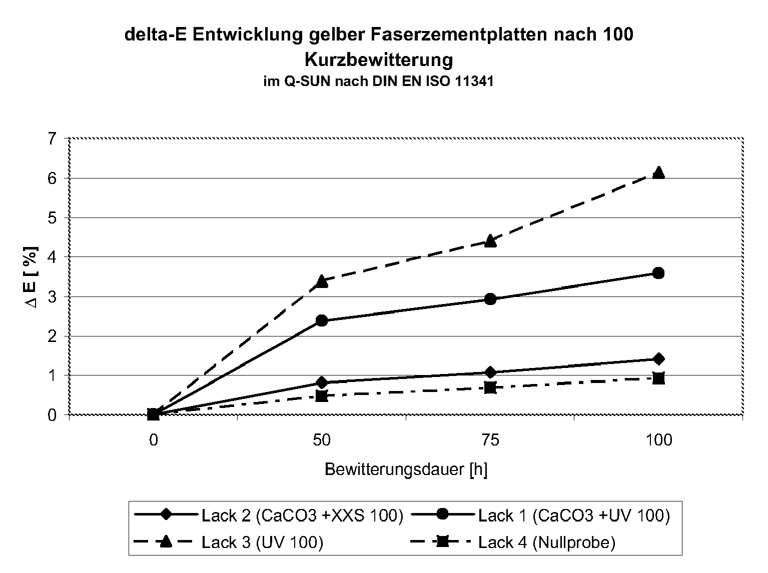

Auch in diesem Diagramm zeigt sich eine deutliche Verbesserung bei der Verwendung der erfindungsgemäßen Composit-Teilchen. Auch hier zeigen die Composit-Teilchen, die aus nicht agglomerierten TiO₂ erhalten werden, die besten Ergebnisse.
Mit der Verwendung der Composit-Teilchen lassen sich also die scheinbar gegensätzlichen Eigenschaften von Photoaktivität (oleofaktorischer Test und Reaktivität nach Berauchung) einerseits als auch der Beschichtungsstabilität gegen Kreiden, Vergilbung und Abbau der Buntpigmente andererseits in einer beliebigen Beschichtungsrezeptur gleichzeitig erzielen.

## Patentansprüche

1. Composit-Teilchen, welches ein anorganisches Trägerteilchen mit überwiegend isotroper Geometrie und mit einer mittleren Teilchengröße zwischen 0,1 µm und 100 µm aufweist, wobei die Oberfläche dieses anorganischen Trägerteilchens mit einer photokatalytisch aktiven Substanz mit einer mittleren Teilchengröße bzw. Schichtdicke der Oberflächenbelegung zwischen 1 nm und 300 nm ganz oder teilweise bedeckt ist.

2. Composit-Teilchen nach Anspruch 1, **dadurch gekennzeichnet, dass** die photokatalytisch aktive Substanz in nicht agglomerierter Form auf das Trägerteilchen aufgebracht wird.

3. Composit-Teilchen nach Anspruch 1, **dadurch gekennzeichnet, dass** es zusätzlich ein Bindemittel aufweist, dass aus der Härtung und/oder Vernetzung einer organischen Siliciumverbindung, insbesondere einem Siliciumalkoxylat, resultiert.

4. Composit-Teilchen nach einem der vorhergehenden Ansprüche, **dadurch gekennzeichnet, dass** das anorganische Trägerteilchen eine BET-Oberfläche zwischen 0,1 und 20 m²/g aufweist.

5. Composit-Teilchen nach einem der vorhergehenden Ansprüche, **dadurch gekennzeichnet, dass** die photokatalytisch aktive Substanz eine BET-Oberfläche zwischen 1 und 350 m²/g aufweist.

6. Verwendung eines Composit-Teilchens nach einem der vorhergehenden Ansprüche in einer Matrix aus Bindemitteln zur Erhöhung der Kreidungsbeständigkeit einer photokatalytisch aktiven Beschichtungszusammensetzung.
